# EUROPEAN PATENT APPLICATION

(11) **EP 4 020 727 A1**
(43) Date of publication of application: **29.06.2022**
(21) Application number: 20216576.7
(22) Date of filing: 22.12.2020
(51) Int. Cl.: H02B 1/54, F16F 15/067

(54) **SWITCHGEAR ASSEMBLY AND DAMPING DEVICE FOR AN ELECTRIC SWITCHGEAR**

(71) Applicant: Hitachi Energy Switzerland AG, 5400 Baden (CH)
(72) Inventor: Redasani, Chetan, 390004 Gujrat (IN); Mingiardi, Roberto, 20141 Milano (IT); Romani, Sara, 29122 Piacenza, PC (IT); Errico, Ennio, 24040 Bergamo (IT)
(74) Representative: Epping - Hermann - Fischer

(57) **Abstract**

A switchgear assembly (1) comprises an electric switchgear (5) and a support structure (6) supporting the electric switchgear (5), wherein the support structure (6) comprises a damping device (12) for damping mechanical impacts. The switchgear assembly (1) can be used in an offshore wind turbine.

## Description

The present invention is directed to a switchgear assembly comprising an electric switchgear and a support structure. The electric switchgear may be a gas-filled switchgear and may be used in an offshore wind turbine, for example.

Each of patent documents US 9,297,362 B2 and US 5,578,805 A discloses a gas-filled electric switchgear.

During transportation of an electric switchgear from an assembly site to an operation site via road and sea, mechanical impacts such as vibration and shock impulses may occur in all directions. When using the electric switchgear in a wind turbine, the electric switchgear is usually already fixed to a floor of a section of the turbine in its final location in the turbine. Heavy mechanical impacts can lead to mechanical damage of parts of the switchgear, such as deformation of current carrying parts and reduction of the dielectric clearance. Furthermore, during operation, heavy mechanical impacts due to ocean waves or heavy wind may also lead to mechanical damage or false tripping of the electric switchgear. In addition to that, false tripping can also occur due to mechanical vibrations of electric motors of the switchgear during operation.

It is an object of the present invention to provide an improved switchgear assembly for an offshore wind turbine and a damping device for an electric switchgear.

According to a first aspect of the invention, a switchgear assembly comprises an electric switchgear and a support structure supporting the electric switchgear. The support structure comprises a damping device for damping mechanical impacts.

The electric switchgear may be a high voltage switchgear, i.e., a switchgear with a rating voltage above 52 kV. The electric switchgear may be a gas-filled switchgear. The switchgear may be configure for a wind turbine, such as an offshore wind turbine, for example.

The support structure may carry the entire weight of the switchgear. The electric switchgear and further components of the switchgear assembly supported by the support structure may have a weight of several tons.

The support structure may comprise a rigid support to which the switchgear may be directly fixed. The support structure may comprise a mounting surface for mounting the switchgear assembly on a floor at its installation site. The floor may be a floor of a wind turbine tower, for example. The support structure may also serve to securely fix the switchgear assembly to the floor. As an example, the support structure may be fixed to the floor by bolts. The damping device may be located below the rigid support and may provide the mounting surface.

The damping device may comprise at least one helical coil. The helical coil is elastically deformable and dampens mechanical impacts. The helical coil may be designed such that it dampens mechanical impacts both from vertical, transversal and longitudinal directions. Accordingly, the helical coil is sufficiently elastically deformable in all three directions. The helical coil can be made from stainless steel, for example.

The damping device may comprise several helical coils located at different positions of the support structure. The helical coils may be located at corners of the support structure. As an example, the damping device comprises four helical coils located at four corners of the support structure.

The helical coil may be positioned such that a longitudinal axis extends parallel to a mounting surface of the support structure. This orientation of the helical coil ensures that the weight of the switchgear can be taken up and sufficient damping in all three directions can be ensured. The geometry of the coil, such as outer dimension and pitch, can be optimized according to the weight and mass distribution of the switchgear and the required damping in the spatial directions.

In an embodiment, the damping device comprises at least one stabilizer, wherein the helical coil is led through the stabilizer. The stabilizer may have the shape of bar. The stabilizer may enclose a defined angular section of the coil.

The stabilizer may enhance the stability of the coil by directly connecting adjacent turns of the coil. Furthermore, the stabilizer may provide a plane surface for homogenously distributing the weight of the switchgear on the helical coil. The stabilizer may also ensure a firm fixation of the helical coil to the switchgear.

The damping device may have several stabilizers, wherein the helical coil is led through the several stabilizers. As an example, the coil may be led trough two stabilizers located at opposite angular sections of the helical coil. As an example, the helical coil may be led through a first stabilizer facing the rigid support of the support structure. The helical coil may be led through a second stabilizer located at a section of a coil facing the mounting surface of the switchgear assembly.

According to a further aspect of the invention, a wind turbine comprises a switchgear assembly. The switchgear assembly comprises an electric switchgear and a support structure supporting the electric switchgear, wherein the support structure comprises a damping device for damping mechanical impacts. The switchgear assembly may have any structural and functional characteristics of the switchgear assembly described in the foregoing.

As an example, the switchgear assembly may be fixed to a floor of a tower of the wind turbine. The wind turbine may be an offshore wind turbine.

According to a further aspect of the invention, a damping device for supporting an electric switchgear and damping mechanical impacts is disclosed. The damping device comprises at least one helical coil, wherein a longitudinal axis of the helical coil extends parallel to a mounting surface of the damping device. The damping device may have any structural and functional characteristics as described in the foregoing.

As an example, the damping device may be part of a support structure. The support structure may comprise a rigid support on which the switchgear is fixed, wherein the rigid support is positioned on the damping device.

According to a further aspect of the invention, a use of a damping device for supporting an electric switchgear and damping mechanical impacts is disclosed. The damping device and the switchgear may have any structural and functional characteristics as described in the foregoing.

As an example, the damping device may be used in a switchgear assembly in an offshore wind turbine.

The present disclosure comprises several aspects of an invention. Every feature described with respect to one of the aspects is also disclosed herein with respect to the other aspect, even if the respective feature is not explicitly mentioned in the context of the specific aspect.

Further features, refinements and expediencies become apparent from the following description of the exemplary embodiments in connection with the figures.
Figure 1 is a schematic, partially sectional view of a part of a wind turbine tower in vertical orientation,
Figure 2 is a schematic partially sectional view of a part of a wind turbine tower in horizontal orientation,
Figure 3A is a perspective view of a switchgear assembly,
Figure 3B is a perspective view of a damping device of the switchgear assembly of Figure 3A,
Figure 4A is a schematic side view a damping device,
Figure 4B is the damping device of Figure 4A in a top view,
Figure 4C is the damping device of Figure 4A in a cross-sectional view.

In the figures, elements of the same structure and/or functionality may be referenced by the same reference numerals. It is to be understood that the embodiments shown in the figures are illustrative representations and are not necessarily drawn to scale.

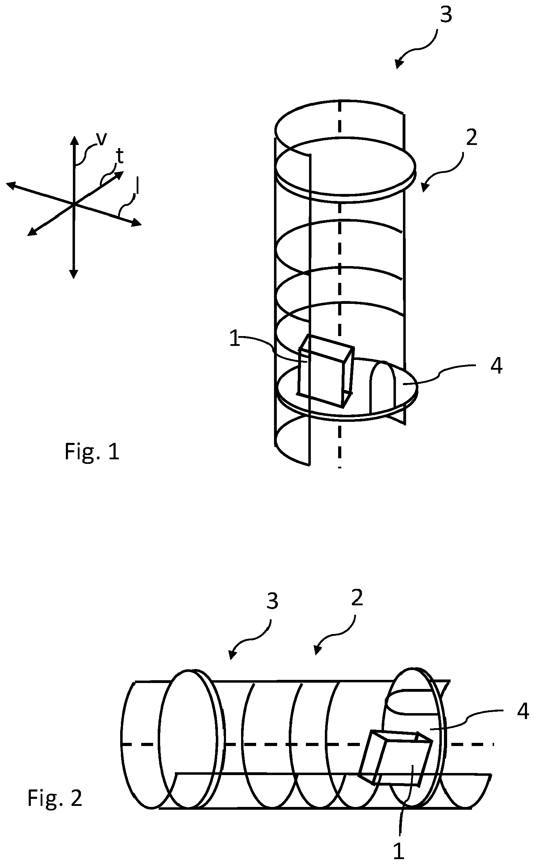

Figure 1 schematically shows a switchgear assembly 1 in a section 2 of a wind turbine tower 3. The section 2 may be a bottom section of the tower 3. The switchgear assembly 1 is positioned and fixed on a floor 4 inside the tower 3.

The nominal height of offshore wind turbine towers 3 may be more than 150 m. Such wind turbines may have a capacity of at least 5 MW, for example. Therefore, the tower 3 cannot be transported in a single piece but in several sections. The individual sections are pre-assembled with auxiliary equipment, such as a switchgear, control panel, transformer and other equipment. The sections are then transported to a final site by sea and/or road transport.

The view shown in Figure 1 may be a partial view of the tower 3 in operation, in particular at an offshore site in deep sea. The view may alternatively show the section 2 during transport. As an example, the section 2 may be transported in the shown vertical orientation during sea transport.

Figure 2 schematically shows the position of a switchgear assembly 1 in a section 2 of a wind turbine tower 3 during horizontal transportation. As an example, the section 2 may be transported in the shown vertical orientation during road transport.

During transportation via road and sea, various values of vibrations and shock impulses need to be considered, both in longitudinal l, transversal t and vertical v directions. The directions are shown in Figure 1. Due to the different possible orientations of the section 2 and, thus, the switchgear assembly 1, during transport, vibrations in any direction may occur and have to be considered.

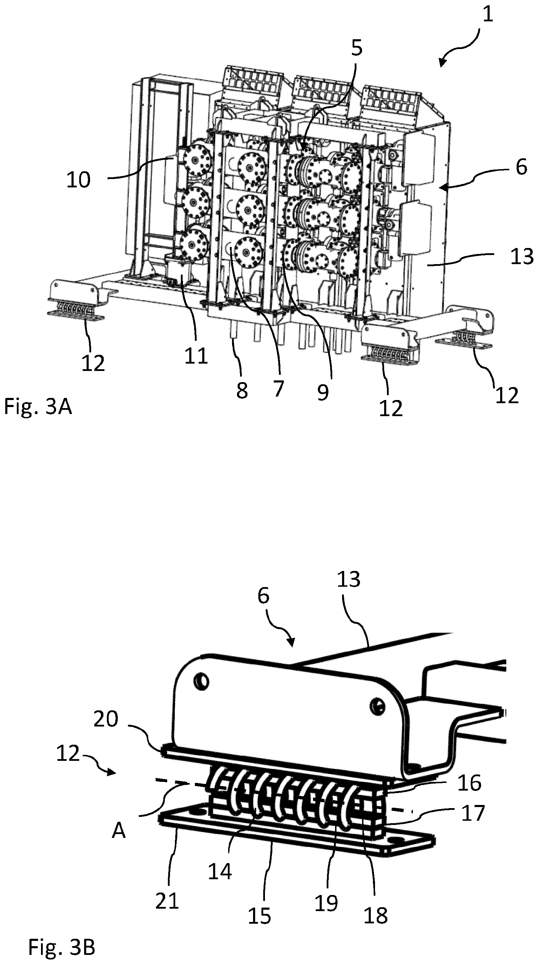

Figure 3A shows a switchgear assembly 1, which may be used in the wind turbine tower 3 of Figures 1 and 2. The switchgear assembly 1 comprises an electric switchgear 5 fixed to a support structure 6.

Generally, an electric switchgear 5 is used for switching on and off electrical circuits during abnormalities in the electrical flow. The switchgear 5 may be arranged between a transformer of the wind turbine and transmission lines, for example. The switchgear 5 may be a high voltage switchgear, i.e., a switchgear with a rating voltage above 52 kV. The switchgear 5 may use gases as an insulating media, such as SF6, for example.

The switchgear 5 has three poles 7 connected to electric cables 8 at a bottom of the switchgear assembly 1. Each of the pole 7 can be disconnected by a circuit breaker 9. During normal operation conditions, the circuit breakers 9 are filled with pressurized gas, at a pressure of 6 bar, for example. The gas isolates the current carrying parts from grounded parts of the respective circuit breaker 9.

The gas pressure is constantly monitored by a density monitor 10. If the density monitor 10 detects an abnormality in the gas pressure, the circuit breakers 9 get simultaneously active to avoid current flow at false gas pressure. In particular, a motor drive 11 separates electric contacts in each of the poles 7.

However, in an offshore wind turbine, a drop in gas pressure may not only be caused by faulty conditions such as gas leakage but also by heavy vibrations due to ocean water waves, heavy wind or vibration during operation of mechanical parts of the turbine. As an example, operation of the motor drive 11 of the circuit breakers 9 may cause vibrations leading to false tripping.

Such operating conditions lead to a high number of interruptions triggered by the switchgear 5.

Furthermore, severe shocks and vibrations may shift or deform parts of the switchgear 5. As an example, current carrying parts and grounded parts are arranged concentrically and the proper relative position of the parts may be crucial for maintaining the required dielectric clearance. As an example, a current carrying part may be located concentrically in a grounded part of the circuit breaker 9. By severe vibrations and shocks the concentricity may be destroyed and the required dielectric clearance may be lost.

Furthermore, during transport, severe vibrations and shocks may occur, which may lead to permanent deformations in the switchgear 5.

In order to reduce the number of false tripping and protect the switchgear 5 from mechanical damage caused by vibrations and shock impulses, the support structure 6 comprises a damping device 13. The damping device 12 comprises four parts fixed to four corners of the rigid support 13.

Figure 3B shows a detailed view of a part of the damping device 12 of Figure 3A. Each part of the damping device 12 comprises a helical coil 14 arranged such that a longitudinal axis A of the helical coil 14 extends parallel to a mounting surface 15 of the support structure 6. The mounting surface 15 establishes the connection to a floor 4 or another location to which the switchgear assembly 1 is fixed.

The helical coil 14 may be of stainless steel, for example. The helical coil 14 is led through two stabilizers 16, 17. Each of the stabilizers 16, 17 has the shape of a bar. Each of the stabilizers 16, 17 may have two parts 18, 19 through which the helical coil 14 is arranged. The parts 18, 19, and thereby also the coil 14, may be fixed to each other by a screw joint, for example. The parts 18, 19 may have interior indentions for accommodating the coil 14.

A first stabilizer 16 is located at a side of the helical coil 14 facing the rigid support 13 of the support structure 6. A second stabilizer 17 is located at a side of the helical coil 14 facing the mounting surface 15, such as a floor 4. The stabilizers 16, 17 increase the stability of the damping device 12. Furthermore, the stabilizers 16, 17 provide flat surfaces for enabling a secure fixation of the damping device 12 to both the rigid support 13 and the floor 4. Furthermore, the stabilizers 16, 17 enable a uniform pressure distribution on the helical coil 14.

The stabilizers 16, 17 can be fixed via connectors 20, 21 to the rigid support 13 and the floor 4, respectively. The connectors 20, 21 are in the form of plates. The stabilizers 16, 17 can be screw-fixed to the connectors 20, 21, for example. The stabilizers 16, 17 and connectors 20, 21 can be of stainless steel, for example.

The switchgear assembly 1 may be fixed to a mounting site only via the damping device 12. Accordingly, the damping device 12 carries the entire weight of the switchgear 5, the rigid support 13 and further components supported by the rigid support 13. The depicted switchgear assembly 1 may have a weight of several tons.

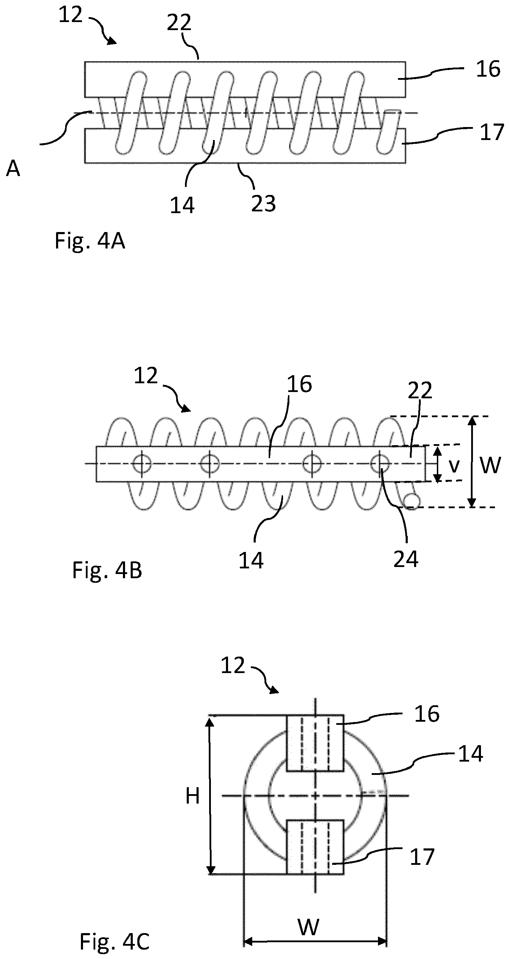

Figure 4A shows a part of a damping device 12 in a side view, Figure 4B shows the part of the damping device 12 in a top view and Figure 4C shows the part of the damping device 12 in a cross-sectional view. The damping device 12 shown in Figures 3A and 3B comprises four such parts. A damping device 12 may consist also of a single part.

As can be seen in Figure 4A, the helical coil 14 is led trough the first stabilizer 16 and the second stabilizer 17. The first stabilizer 16 provides a plane upper surface 22 for the damping device 12 and the second stabilizer 17 provides a plane lower surface 23 for the damping device 12. Furthermore, the stabilizers 16, 17 form a strong connection between adjacent windings of the helical coil 14.

The shown shape and orientation of the helical coil 14 enables damping of mechanical impacts in all three spatial direction. On occurrence of shock or vibration, the helical coil 14 elastically deforms and dampens the impact.

As can be seen in Figure 4B, the width v of each of the stabilizers 16, 17 is smaller than the width W of the coil 14. This enables maintaining a sufficient deformability of the coil 14.

The stabilizers 16 is fixed at fixation points to the connector 20 or is fixed directly to the rigid support 13.

As can be seen in Figure 4C, the helical coil 14 is led through each of the stabilizers 16, 17 such that a respective angular section of the helical coil 14 is fully enclosed by the stabilizers 16, 17 in an upper part and a lower part of the coil 14, respectively.

The height H and the width W of the helical coil 14 and stabilizers 16, 17 can be optimized according to the weight and mass distribution of the switchgear 5 and the required damping in each of the spatial directions. Also the pitch of the helical coil 14 can be optimized, accordingly.

### Reference numerals

- 1: switchgear assembly
- 2: section
- 3: tower
- 4: floor
- 5: electric switchgear
- 6: support structure
- 7: pole
- 8: cable
- 9: circuit breaker
- 10: density monitor
- 11: motor drive
- 12: damping device
- 13: rigid support
- 14: helical coil
- 15: mounting surface
- 16: stabilizer
- 17: stabilizer
- 18: part
- 19: part
- 20: connector
- 21: connector
- 22: upper surface
- 23: lower surface
- 24: fixation point
- A: longitudinal axis
- l: longitudinal direction
- v: vertical direction
- t: transversal direction
- v: width stabilizer
- W: width coil
- H: height

## Claims

1. A switchgear assembly comprising
an electric switchgear (5) and a support structure (6) supporting the electric switchgear (5), wherein the support structure (6) comprises a damping device (12) for damping mechanical impacts.

2. The switchgear assembly of claim 1,
wherein the damping device (12) enables damping mechanical impacts from vertical (v), transversal (t) and longitudinal (1) directions.

3. The switchgear assembly of any of claim 1 or 2, being configured for an offshore wind turbine.

4. The switchgear assembly of any of claims 1 to 3,
wherein the damping device (12) comprises at least one helical coil (14).

5. The switchgear assembly of claim 4,
wherein a longitudinal axis (A) of the helical coil (14) extends parallel to a mounting surface (15) of the support structure (6).

6. The switchgear assembly of any of claims 4 or 5,
wherein the damping device (12) comprises at least one stabilizer (16, 17) through which the helical coil (14) is led.

7. The switchgear assembly of any of claims 4 to 6,
comprising four helical coils (14) located at four corners of the support structure (6).

8. The switchgear assembly of claim 6 or 7,
wherein the stabilizer (16, 17) provides a plane surface (22, 23) for homogenously distributing the weight of the switchgear on the helical coil (14).

9. The switchgear assembly of any of claims 6 to 8,
wherein the damping device (12) comprises at least two stabilizers (16, 17) through which the helical coil (14) is led, wherein the stabilizers (16, 17) are located at opposite angular sections of the helical coil (14).

10. A wind turbine comprising the switchgear assembly (1) of any of claims 1 to 9.

11. A damping device for supporting an electric switchgear (5) and damping mechanical impacts, wherein the damping device (12) comprises at least one helical coil (14), wherein a longitudinal axis (A) of the helical coil (14) extends parallel to a mounting surface (15) of the damping device (12) .

12. A use of the damping device of claim 11 for supporting an electric switchgear (5) and damping mechanical impacts.

13. The use of the damping device of claim 12 in an offshore wind turbine.
